Europäisches Patentamt

**European Patent Office**

Office européen des brevets

(19)

(11) Veröffentlichungsnummer: **0 038 955**
**B1**

(12)

# EUROPÄISCHE PATENTSCHRIFT

(45) Veröffentlichungstag der Patentschrift:
**27.06.84**

(21) Anmeldenummer: **81102494.2**

(22) Anmeldetag: **02.04.81**

(51) Int. Cl.³: **B 60 R 13/04**

(54) **Geblasene Zier- oder Schutzleiste.**

(30) Priorität: **30.04.80 DE 3016652**

(43) Veröffentlichungstag der Anmeldung:
**04.11.81 Patentblatt 81/44**

(45) Bekanntmachung des Hinweises auf die Patenterteilung:
**27.06.84 Patentblatt 84/26**

(84) Benannte Vertragsstaaten:
**BE DE FR GB IT**

(56) Entgegenhaltungen:
**DE - A - 1 944 290**
**DE - A - 2 211 363**
**FR - A - 2 374 562**
**FR - E - 75 737**
**US - A - 3 982 780**

(73) Patentinhaber: Gebr. Happich GmbH,
Postfach 10 02 49 Clausenbrücke 1,
D-5600 Wuppertal 1 (DE)

(72) Erfinder: Treber, Willi, Voswinckel 12,
D-5600 Wuppertal 2 (DE)
Erfinder: Schienz, Rolf, Ing.grad., Weierstall 1,
D-5620 Velbert 15 (DE)
Erfinder: Fritsch, Gunter, Dipl.-Ing., Severinghauser
Strasse 12, D-5828 Ennepetal 18 (DE)
Erfinder: Hansmann, Joseph, Steinerring 179,
D-8192 Geretsried (DE)

(74) Vertreter: Rehders, Jochen, c/o Fa. Gebr. Happich
GmbH Postfach 10 02 49 Clausenbrücke 1,
D-5600 Wuppertal 1 (DE)

**Beschreibung**

Die Erfindung bezieht sich auf eine Zier- oder Schutzleiste, die als in sich geschlossener Blasformkörper ausgebildet ist und eine Unterseite und eine das Leistenprofil bildende Oberseite aufweist.

Durch DE-C-2 536 766 ist es bereits bekanntgeworden, Zier- oder Schutzleisten als Blasformkörper auszubilden. Erfahrungsgemäß haben sich alle in dieser Patentschrift angeführten Vorteile gegenüber Leisten anderer Herstellungsverfahren in vollem Umfang bestätigt. Es hat sich jedoch bei geblasenen Leisten ein Nachteil gezeigt, der allgemein, insbesondere jedoch unter Gebrauchsbedingungen auftritt, nämlich, daß durch unterschiedliche Volumenverteilung des geblasenen Leistenquerschnitts durch einseitig stärker wirksame Temperaturbelastung der Ober- bzw. Sichtseite der Leiste gegenüber der Anlagefläche der Unter- oder Grundseite ein unterschiedliches Dehnungs- oder Schrumpfungsverhalten auftritt. Dieses Verhalten führt dazu, daß sich die geblasene Leiste nach der eine höhere Temperatur aufweisenden Seite hin durchbiegt, also eine konvexe Durchbiegung erhält.

Fernerhin ist die Durchbiegung auch bei höher ausgebildeten Leisten größer als bei Leisten mit flachem Querschnitt. Wenn es sich nur um Gebrauchsbedingungen handelt, spielt auch die Leistenbefestigung eine Rolle. Experimentell ist versucht worden, durch dicht beieinanderliegende Befestigungen an einem starren Körper, wie einer Karosserie-Außenwand, die Leiste so gut zu befestigen, daß die Dehnung hierdurch aufgefangen wird. Teilerfolge sind aber nur bei relativ dünnen Leisten aufgetreten; Klebebefestigungen reichen hier aber auch nicht aus; die Dauerbefestigung ist auch nicht gesichert, insbesondere ist jedoch die aus zusätzlichem Material- und Montageaufwand gebildete Kostenaufwendigkeit anzuführen.

Es ist Aufgabe der Erfindung, eine geblasene Zier- oder Schutzleiste zu schaffen, welche in einfacher Weise nur durch konstruktive und/oder materialmäßige Maßnahmen eine aus seiten- oder bereichsbedingten unterschiedlichen temperaturabhängigen Volumenvergrößerungen gebildete Durchbiegung verhindern, ganz gleich, ob die Leiste freitragend überbrückend angeordnet ist oder ob die Leiste mit den einfachen rationellen Befestigungsausbildungen, wie wenigen Klipsen oder nur kleben, angebracht ist.

Die Aufgabe wird erfindungsgemäß durch die im Kennzeichen des Anspruches 1 angegebenen Maßnahmen gelöst. Wenn keine anderen Umstände, wie beispielsweise die Befestigung oder auch eine zusätzliche Stabilisierung der Leiste vorgenommen ist, wird ein Ausgleich der unterschiedlich temperaturbelasteten Seiten derart stattfinden, daß sich die Sicken im weniger erwärmten Bereich im Querschnitt verringern und umgekehrt, die Sicken im Bereich mit höherer Temperatur im Querschnitt vergrößern.

Es ist auch möglich, der Unterseite eine oder mehrere längs verlaufende Sicken zuzuordnen. Dies ist dann zweckmäßig, wenn die Oberseite der Leiste in einem größeren Bogen ausgebildet ist, also wenn es sich um eine hohe Leiste handelt. Bei besonders großen und/oder im Querschnitt hohen Leisten wird man die quer und längs verlaufenden Sicken miteinander kombinieren. Die Quersicken können dann vor der längs verlaufenden Sicke enden oder umgekehrt. Es ist aber auch möglich, diese unterschiedlichen Sicken sich kreuzend und ineinander übergehend auszubilden.

Die Sicken und auch eine einzelne Sicke können herangezogen werden, die Biegesteifigkeit der Leiste zu erhöhen und/oder die Sicken auszunutzen, der Leiste eine erhöhte energieverzehrende Wirkung aufzugeben, nämlich, wenn die quer und längs verlaufenden Sicken unterschiedlich tief ausgebildet sind und insbesondere eine oder mehrere längs verlaufende Sicken mit ihren Scheiteln bis an die Innenfläche der Oberseite oder mit einem geringen Abstand zu dieser ausgebildet sind.

Besondere Anforderungen beim gebrauchsmäßigen Einsatz der Leiste können auch zu weitergehenden konstruktiven Ausbildungen führen. So können die Sicken, insbesondere die quer verlaufenden Sicken, bereichsweise unterschiedlich groß ausgebildet und/oder im Abstand zueinander unterschiedlich weit voneinander angeordnet sein. Es ist ebenfalls möglich, daß zumindest eine quer verlaufende Sicke einer Befestigungsausbildung für die Leiste benachbart angeordnet ist. Durch die zuletzt aufgeführte Anordnung ist der Dehnungsausgleich unmittelbar von der Befestigungsausbildung ausgehend, festgelegt, außerdem sind kleinere Toleranzen der Befestigungsausbildung der Leiste zu der Befestigungsausbildungsaufnahme leicht auszugleichen.

In der Zeichnung ist die Erfindung in mehreren Ausführungsbeispielen in schematisch vereinfachter Weise dargestellt. Es zeigen

Fig. 1 und 2 eine Leiste in Seiten- und Unteransicht mit Quersicken,

Fig. 3 eine Leiste in Unteransicht mit einer Längs- und mehreren Quersicken,

Fig. 4 eine Leiste im Längsschnitt,

Fig. 5 eine Unterseite einer Leiste in Seitenansicht und

Fig. 6 ein weiteres Ausführungsbeispiel einer Leiste im Querschnitt.

Mit 1 ist jeweils ein Leistenkörper bezeichnet, welcher als Blasformkörper ausgebildet ist und daher eine Unterseite 2 und eine Oberseite 3 aufweist.

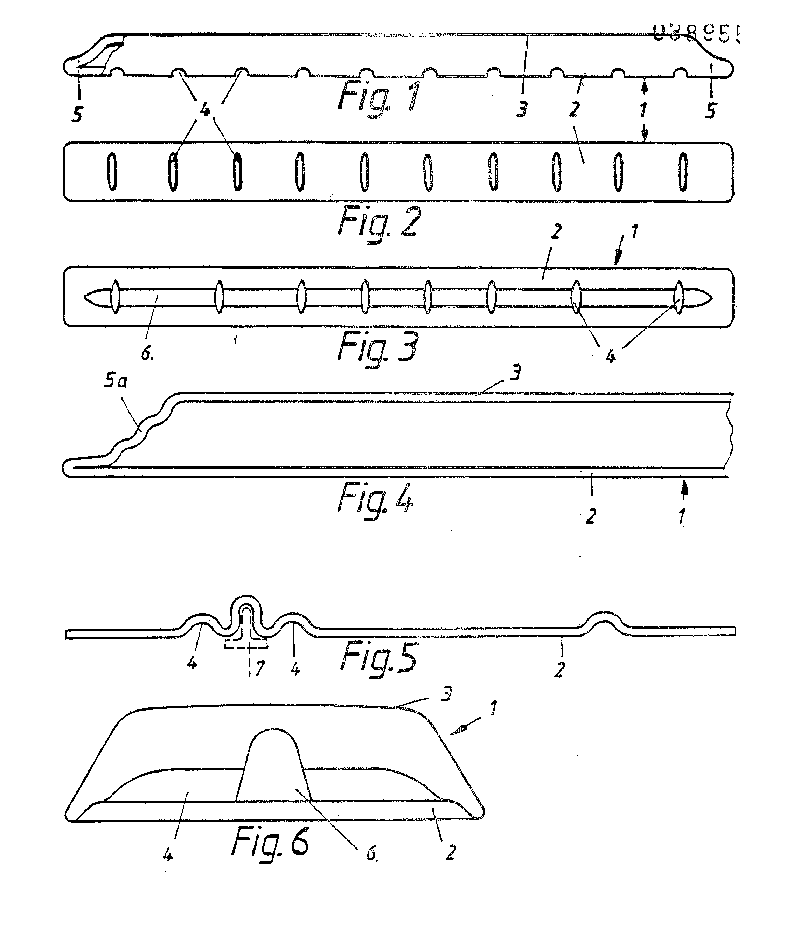

Die Unterseite 2 ist die Befestigungsseite. Es ist, abgesehen von Fig. 5, vollständig freigelassen, in welcher Weise der Leistenkörper 1 mit seinem Träger, beispielsweise einer Karosserie-Außenwand, befestigt ist. Hier können alle bekannten, von sonstigen Leisten her bereits angewandten Befestigungen eingesetzt werden, so Verschraubungen, Klipse und Verklebungen. Die erfindungsgemäße Ausbildung der Leiste ist insbesondere darauf abgestellt, daß sie allein durch Verklebungen, wie Verklebungen mit einem Doppelklebeband, ausreichend fest und über die gesamte Gebrauchsdauer hält. Die Leiste nach Fig. 1 bzw. 2 weist lediglich Quersicken 4 auf. Im allgemeinen wird man die abgefahrene Länge der Unterseite 2 und die der Oberseite 3 gleichlang ausbilden oder anders ausgedrückt, die Unterseite 2 einschließlich der Sicken 4 und die Oberseite 3 einschließlich ihrer zur Unterseite 2 hinführenden Endbereiche 5 bilden eine gleichlange Strecke. Die gleichlange Ausführung von Unterseite 2 und Oberseite 3 wird man dann konstruktiv festlegen, wenn auch die Materialdicke der Wandungen gleich ist. Es ist natürlich möglich, die abgefahrene Länge von Unterseite 2 und Oberseite 3 unterschiedlich zu gestalten, wenn von der Materialdicke her ein diesbezüglich bereits berücksichtigender Ausgleich vorgenommen ist.

Fig. 3 zeigt einen Leistenkörper 1 in Unteransicht, welcher außer Quersicken 4 eine Längssicke 6 aufweist. Die Quersicken 4 haben zueinander einen unterschiedlichen Abstand, zur Mitte hin sind sie dichter als zu ihren beiden Enden hin zueinander gestellt. Die Form der Quersicken 4 nach den Fig. 2 und 3 ist auch untereinander gleich ausgeführt. Die Quersicken 4 und die Längssicke 6 überkreuzen sich gegenseitig, also gehen ineinander über. Die Möglichkeit, unterschiedlich lange und gegebenenfalls unterschiedlich breite Quersicken 4 einzusetzen, soll hier angeführt werden.

Fig. 4 zeigt fernerhin einen Endbereich 5a, welcher im Querschnitt gewellt ausgebildet ist und demnach aneinandergrenzende Sicken aufweist, die ebenfalls einem Längenausgleich dienen, der sich bei dieser Anordnung auf die Oberseite 3 auswirkt.

Fig. 5 zeigt lediglich eine Unterseite 2 mit Quersicken 4, bei der zwei Quersicken 4 dicht beieinander liegen und eine Befestigungsausbildung 7 zwischen sich einschließen. Eine solche konstruktive Ausgestaltung ist zweifach zweckmäßig. Einmal geht die Dehnung gezielt von der Befestigungsausbildung 7 nach beiden Seiten hin aus, zum anderen kann die Befestigungsausbildung selbst in geringen Grenzen seitlich verlagert werden, um hiermit Toleranzen in der Übereinstimmung mit einer Aufnahme für die Befestigungsausbildung 7 auszugleichen.

Fig. 6 zeigt nun einen Querschnitt, welcher der Fig. 3 entnommen sein könnte. Wesentlich ist die Ausbildung der Längssicke 6 bis nahe an die Innenfläche der Oberseite 3. Durch diese Ausbildung ist nämlich in geeigneter Weise einmal die Biegesteifigkeit der Leiste wesentlich erhöht, insbesondere jedoch wird die energieverzehrende Wirkung der Leiste besonders wirksam mit eingebaut, wenn nämlich bei einer Kraft auf die Oberfläche der Oberseite 3 diese eingedrückt wird, so wird die Eindruckstelle nach dem Weg, der aus der Differenz des Scheitels der Längssicke 6 zur Oberseite 3 besteht, durch die Längssicke 6 aufgefangen, und zwar weitgehend, weil die Wandungen der Sicke 6 relativ steil angestellt sind. Längssicke 6 und Quersicken 4 gehen ineinander über.

## Patentansprüche

1. Zier- oder Schutzleiste, die als in sich geschlossener Blasformkörper ausgebildet ist und eine Unterseite (2) und eine das Leistenprofil bildende Oberseite (3) aufweist, dadurch gekennzeichnet, daß die Unterseite (2) und/oder die Oberseite (3) längselastisch ausgebildet ist, wodurch temperaturabhängige unterschiedliche Dehnungen bzw. Zusammenziehungen voneinander abweichender Bereiche oder Seiten der Leiste (1) ausgeglichen werden, wobei zumindest die Unterseite (2) eine oder mehrere Sicken (4) in querverlaufender Anordnung aufweist.

2. Leiste nach Patentanspruch 1, dadurch gekennzeichnet, daß der Unterseite (2) eine oder mehrere Sicken (6) längsverlaufend mit der Leiste (1) zugeordnet sind.

3. Leiste nach Patentanspruch 1 und 2, dadurch gekennzeichnet, daß die quer- und längsverlaufenden Sicken (4, 6) sich kreuzend und ineinander übergehend der Unterseite (2) zugeordnet sind (Fig. 3).

4. Leiste nach Patentanspruch 2 oder 3, dadurch gekennzeichnet, daß die quer- und längsverlaufenden Sicken (4, 6) unterschiedlich tief ausgebildet sind und insbesondere eine oder mehrere längsverlaufende Sicken (6) mit ihren Scheiteln bis an die Innenfläche der Oberseite (3) oder mit einem geringen Abstand zu dieser ausgebildet sind.

5. Leiste nach Patentanspruch 1, 2, 3 oder 4, dadurch gekennzeichnet, daß die Sicken, insbesondere die quer verlaufenden Sicken (4) bereichsweise unterschiedlich groß ausgebildet und/oder im Abstand zueinander unterschiedlich weit voneinander angeordnet sind (Fig. 3).

6. Leiste nach Patentanspruch 1 und/oder folgende, dadurch gekennzeichnet, daß zumindest eine quer verlaufende Sicke (4) einer Befestigungsausbildung (7) für die Leiste (1) benachbart angeordnet ist.

## Claims

1. An ornamental or protective strip blow-moulded as a self-contained article and having a bottom face (2) and a face (3) forming the strip's profiled top, characterized in that, for balancing out different temperature-dependent elongations or contractions of the strip's different zones of faces, the bottom face (2) and/or the top face (3) ist, or are, resilient along its, or their, longitudinal extent, and in that at least the bottom face (2) ist provided with one or more transversely extending recesses (4).

2. A strip according to claim 1, characterized in that the bottom face (2) is provided with one or more recesses (6) extending longitudinally along the strip.

3. A strip according to claim 1 or claim 2, characterized in that the transversely and longitudinally extending recesses (4, 6) intersect and inter-communicate and are associated with the bottom face (2) (fig. 3).

4. A strip according to claim 2 or claim 3, characterized in that the depth of the transversely extending recess, or recesses, differs from that of the longitudinally extending one, or ones, and in that, more particularly, the apex of the one longitudinally extending recess (6), or of one or more of the longitudinally extending recesses (6) is located at, or at a short distance from, the internal surface of the top face (3).

5. A strip according to any of the claims 1, 2, 3 or 4, characterized in that the recesses, more particularly the transversely extending recesses (4), in different regions differ in size and/or are arranged at different distances from each other (fig. 3).

6. A strip according to claim 1 and/or any of the subsidiary ones, characterized in that at least one transversely extending recess (4) is arranged to be located in close vicinity of a fastener for the strip (1) (fig. 5).

**Revendications**

1. Moulure décorative ou de protection en forme de corps creux fermé profilé réalisé par soufflage, comportant une face inférieure (2) et une face supérieure (3) constituant le profil de la moulure, caractérisée en ce que la face inférieure (2) et/ou la face supérieure (3) sont longitudinalement élastiques, ce qui compense des dilatations ou contractions différentes, dépendant de la température, de zones mutuellement différentes, ou de côtés de la moulure (1), la face inférieure (2) au moins comportant une ou plusieurs rainures (4) disposées transversalement.

2. Moulure selon la revendication 1, caractérisée en ce que la face inférieure (2) comporte une ou plusieurs rainures (6) dirigées dans le sens de la longueur de la moulure (1).

3. Moulure selon les revendications 1 et 2, caractérisée en ce que les rainures (4, 6) transversales et longitudinales sont rattachées à la face inférieure (2) en se croisant et en se raccordant (fig. 3).

4. Moulure selon la revendication 2 ou 3, caractérisée en ce que les rainures transversales et longitudinales (4, 6) sont d'une profondeur différente et en particulier une ou plusieurs rainures longitudinales (6) atteignent par leurs sommets la surface intérieure de la face supérieure (3) ou parviennent à une faible distance de celle-ci.

5. Moulure selon la revendication 1, 2, 3 ou 4, caractérisée en ce que les rainures, en particulier les rainures transversales (4) sont d'une dimension variable dans certaines zones et/ou sont disposées à distances mutuelles variables en ce qui concerne leur intervalle mutuel (fig. 3).

6. Moulure selon la revendication 1 et/ou l'une des revendications suivantes, caractérisée en ce qu'une rainure transversale (4) au moins est disposée au voisinage d'un moyen de fixation (7) pour la moulure (1) (fig. 5).

Fig. 1

Fig. 2

Fig. 3

Fig. 4

Fig. 5

Fig. 6